# EUROPÄISCHE PATENTANMELDUNG

(11) **EP 4 085 765 A1**
(43) Veröffentlichungstag der Anmeldung: **09.11.2022**
(21) Anmeldenummer: 22171867.9
(22) Anmeldetag: 05.05.2022
(51) Int. Cl.: A01L 1/00, A01L 1/02, A01L 5/00

(54) **HUFBESCHLAG AUS EINEM FASER-KUNSTSTOFF-VERBUND, INSBESONDERE FÜR PFERDE ODER RENNPFERDE**

(30) Priorität: 06.05.2021 CH 5092021
(71) Anmelder: Winner AG, 7000 Chur (CH)
(72) Erfinder: Zindel, Martin, 7302 Landquart (CH); Lampert, Christian, 7307 Jenins (CH)
(74) Vertreter: Riederer Hasler & Partner Patentanwälte AG

(57) **Zusammenfassung**

Hufbeschlag (11), insbesondere ein U-förmiger Hufbeschlag für Pferde, beinhaltend eine Lauffläche (13) und eine Hufkontaktfläche (15), welcher eine in Kunststoffmatrix gebettete Schichtung einer Vielzahl von Verstärkungsschichten (31, 31', 33, 33', 35, 35') aufweist, welche jeweils eine Längserstreckung aufweisen und derart angeordnet sind, dass diese der U-förmigen Krümmung des Hufbeschlags folgt. Erfindungsgemäss ist vorgesehen, dass mehrere der Verstärkungsschichten (31, 31', 33, 33') derart angeordnet sind, dass sie sich quer zu ihrer Längserstreckung im Wesentlichen jeweils von der Lauffläche (13) ausgehend zur Hufkontaktfläche (15) hin erstrecken.

## Beschreibung

### TECHNISCHES GEBIET DER ERFINDUNG

Die Erfindung betrifft einen Hufbeschlag für Pferde. Der erfindungsgemässe Hufbeschlag eignet sich für Sportpferde, insbesondere für Rennpferde.

### HINTERGRUND DER ERFINDUNG

Die in der Vergangenheit am häufigsten eingesetzten Hufbeschläge für Rennpferde bestehen normalerweise aus Aluminium. Diese Art Hufbeschlag ist relativ leicht (ca. 127 Gramm), jedoch recht steif und fest. Der Abrieb des Aluminiumbeschlags ist gering. Ein Aluminiumbeschlag hält ungefähr 5 Wochen, danach muss das Pferd neu beschlagen werden. Dies insbesondere auch weil der Huf nachwächst. Metallische Hufbeschläge sind insgesamt recht steif und hart. Mit Hinblick auf die Tiergesundheit wären Materialien wünschenswert, welche den Eigenschaften eines Pferdehufs besser entsprechen.

Die Offenbarungsschrift US 2010/0276163 A1 schlägt alternativ unter anderem einen Hufbeschlag aus faserverstärktem Kunststoff vor, welcher den Pferdehuf vor Abrieb schützt und relativ leicht ist.

In der Offenbarungsschrift CH 710762 A2 ist ein Hufbeschlag für Rennpferde beschrieben, welcher in den erfindungsrelevanten Beispielen aus einem faserverstärkten Duroplastkern (beispielsweise kohlefaserverstärktem Epoxidharz) besteht, welcher mit einer Nutzschicht aus Kunststoff beschichtet ist, z.B. aus einer Nutzschicht aus duroplastischem oder thermoplastischem Polyurethanharz hergestellt. Diese Beschläge sind recht leicht und sollten aufgrund des faserverstärkten Duroplastkerns eine hohe Festigkeit und Widerstandsfähigkeit aufweisen. Es konnte gezeigt werden, dass die effektive Rennleistung eines Pferdes aufgrund des reduzierten Gewichts eines mit Carbonfasern gestärkten Hufbeschlags steigt. Es hat sich jedoch herausgestellt, dass die Hufbeschläge häufig nach kurzer Zeit im Gebrauch unerwartet Brüche aufwiesen, wodurch der Hufbeschlag unbrauchbar wurde und vorzeitig ersetzt werden musste. Zudem, abhängig von Trainingsumfang und Bodenbeschaffenheit, stellte sich heraus, dass der Abrieb nicht optimal war, was die Lebensdauer des Hufbeschlags verkürzen und die Griffeigenschaften des Hufbeschlags beeinträchtigen kann.

Die Offenbarungsschrift WO2018/205044 beschreibt einen Hufbeschlag aus faserverstärktem thermoplastischem Polycarbonat für Rennpferde. Zum einen ist ein Spritzgussherstellungsverfahren zur Herstellung eines Hufbeschlags mit einem Kern aus einem Verbund aus Carbonfaser und Glasfaser in einer Matrix aus thermoplastischem Polykarbonat offenbart. Die den Kern verstärkenden Fasern können dabei ein Geflecht, ein Gewirk oder ein Gewebe bilden und in einer oder mehreren Lagen angeordnet sein. Wenn mehrere Lagen vorliegen, ist die Faserausrichtung in den verschiedenen Lagen vorzugsweise unterschiedlich. In einer bevorzugten Ausführung beinhaltet der Kern z.B. in alternierender Abfolge Gewebelagen aus Carbonfasern und Gewebelagen aus Glasfasern, welche in eine Thermoplastmatrix eingebunden sind. Zum anderen ist offenbart, dass ein mit zwei unterschiedlichen Kurzfasermaterialien verstärktes thermoplastisches Polykarbonatmaterial sich auch ohne den beschriebenen Kern als Hufbeschlagvollmaterial eignet. Diese zweite Variante ist besonders kostengünstig. Im Weiteren wird eine Abriebschutzeinlage offenbart, welche im Hufbeschlag eingebettet ist, z.B. eine gebogene Leiste, welche im Wesentlichen quer zur Laufrichtung angeordnet ist. Kern und Abriebschutzeinlage können ggf. miteinander verbunden sein.

Die Offenbarungsschrift DE 195 38 093 A1 beschreibt einen mechanisch befestigten Hufschutz mit einem Schichtaufbau aus Federstahlbänder oder Hochmodulfasergewebe. Dabei sind die Bänder mit ihrer Breite senkrecht zum Boden oder parallel zur Hufwand stehend und in ihrer Längsausdehnung der Form des Hufrandes folgend angeordnet. Die Bänder können in verformbares Material eingebettet sein, z. B. die Federstahlbänder oder die Hochmodulfasergewebebänder (wie z.B. Kevlar) in Polyurethankunststoff.

Bei vielen Pferdesportarten, ganz besonders im Rennsport, wo regelmässiges und intensives Training besondere Anforderungen an die Hufe bzw. deren Beschlag stellen, sind widerstandsfähige Hufbeschläge eine Grundvoraussetzung, dafür dass der Sport überhaupt betrieben werden kann. Neben der Widerstandsfähigkeit bzw. Haltbarkeit eines Hufbeschlags ist im Sport besonders die Leistung des Tieres von Interesse. Heute erhältliche Beschläge sind nicht optimal, insbesondere nicht für den Pferderennsport, da sie zum einen zu wenig widerstandsfähig sind, insbesondere nicht bruchfest, und/oder die Leistung des Pferdes, zum Beispiel durch zu hohes Gewicht, ungünstigen Halt auf dem Untergrund, Gleiteigenschaften und/oder Dämpfungseigenschaften ungünstig beeinflussen.

Die in der Offenbarungsschrift WO2018/205044 beschriebene Variante mit faserverstärktem Kern, stellte sich als steifer und damit prinzipiell als geeigneter heraus als die darin beschriebene Variante ohne Kern. Entgegen den Erwartungen stellten sich jedoch folgende Nachteile ein. Bei der auf Thermoplastmatrix basierenden Ausführung mit faserverstärktem Kern stellte sich heraus, dass aufgrund der Sprödigkeit des Kerns eine gewisse Bruchgefahr verbleibt, welche von der Thermoplastmatrix nicht aufgehoben werden kann. Einerseits stellte sich heraus, dass sich eine Bruchgefahr insbesondere aufgrund von Schlägen oder Ermüdung des Materials ergab. Andererseits stellte sich die Thermoplastmatrix als zu weich und damit im Vergleich zum Kern als zu stark verformbar heraus. Insgesamt kann eine ungenügende Verbindung von Kern und Matrix festgestellt werden, was sich negativ auf die Lebensdauer des Hufbeschlags auswirkt.

### AUFGABE

Es ist deshalb eine Aufgabe der vorliegenden Erfindung, einen Hufbeschlag für Sportpferde, insbesondere Rennpferde bereitzustellen, mit welchem die Pferde hohe Laufgeschwindigkeiten erzielen können. Gleichzeitig sollte auch bei hohen Laufgeschwindigkeiten das Laufen relativ energiesparend sein, damit auch längerer Distanzen bei hoher Laufgeschwindigkeit möglich sind. Weiter ist es Aufgabe der vorliegenden Erfindung die eingangs genannten Nachteile weitgehend zu beheben und einen Hufbeschlag bereitzustellen, welcher bei geringem Gewicht bruchfest ist, einen geringen Abrieb aufweist und den Pferdefuss bei jedem Tritt optimal dämpft (ohne aber dem Pferd dabei unnötig Energie zu rauben), dies insbesondere unter Rennsportbedingungen. Im Weiteren ist es ein Ziel eine Alternative zum Aluminiumbeschlag bereitzustellen. Insbesondere ist es Ziel einen verbesserten Materialverbund auf Kunststoffbasis bereitzustellen.

Diese und andere Ziele werden durch die Merkmale der unabhängigen Patentansprüche erreicht. Weiterbildungen und/oder vorteilhafte Ausführungsvarianten der Erfindung sind Gegenstand der abhängigen Patentansprüche.

### BESCHREIBUNG DER ERFINDUNG

Diese Erfindung erfüllt die vorhergehenden Erfordernisse, indem sie einen Hufbeschlag, insbesondere einen Hufbeschlag für Pferde bzw. einen Hufbeschlag mit charakteristischer U-Form, d.h. einen U-förmigen Hufbeschlag, bereitstellt, welcher eine Lauffläche und eine Hufkontaktfläche aufweist und welcher aus einer Kunststoffmatrix aufgebaut ist, in welche eine Vielzahl von Verstärkungsschichten gebettet sind, wobei die Verstärkungsschichten jeweils eine Längserstreckung aufweisen und die Verstärkungsschichten derart angeordnet sind, dass deren jeweilige Längserstreckung im Wesentlichen der U-förmigen Krümmung des Hufbeschlags folgt, wobei der Hufbeschlag dadurch ausgezeichnet ist, dass mehrere der Verstärkungsschichten derart angeordnet sind, dass sie sich quer zu ihrer Längserstreckung im Wesentlichen jeweils von der Lauffläche ausgehend zur Hufkontaktfläche hin erstrecken.

Die Verstärkungsschichten, welche derart angeordnet sind, dass sie sich quer zu ihrer Längserstreckung im Wesentlichen jeweils von der Lauffläche ausgehend zur Hufkontaktfläche hin erstrecken, können anders ausgedrückt als im Wesentlichen stehend bzw. perpendikulär zur Hufkontaktfläche ausgerichtet bezeichnet werden.

Ein erfindungsgemässer Hufbeschlag weist gemäss einer vorteilhaften Ausführung zumindest eine Kunststoffmatrix auf, in welcher mehrere Verstärkungsschichten in Form von flächenförmigen textilen Gebilden, wie z.B. textilen Bänder, oder räumlichen textilen Gebilden, wie z.B. textilen Schläuchen, der Hufbeschlagkrümmung folgend, im Wesentlichen perpendikulär zur Hufkontaktfläche bzw. sozusagen stehend eingebettet sind. Textile Gebilde sind zum Beispiel Geflechte, Gewebe, Gewirke, Gestricke und Gelege, wobei Geflechte besonders bevorzugt sind. Zweckdienlicherweise sind flächenförmige textile Gebilde als Bänder ausgeführt bzw. räumliche textile Gebilde als Schläuche. Besonders bevorzugt liegen die Verstärkungsschichten als Geflechte vor, insbesondere als geflochtene Bänder und/oder Schläuche.

Die Vorteile des erfindungsgemässen Hufbeschlags im Gegensatz zu bis anhin bekannten Faserverbundhufbeschlägen sind z.B. verbesserte oder optimierte Eigenschaften in Bezug auf Abriebverhalten der Hufbeschläge (Abriebresistenz, Rauheit, Rutschfestigkeit) und Beanspruchung der Gelenke beschlagener Tiere (Gelenkschonung).

Die im Folgenden angeführten weiteren vorteilhaften Ausführungsvarianten führen allein oder in Kombination miteinander zu weiteren Verbesserungen.

Zweckmässig ist, dass die zur Hufkontaktfläche perpendikulär bzw. stehend ausgerichteten Verstärkungsschichten im Wesentlichen derart gekrümmt ausgebildet sind, dass sie der U-förmigen Krümmung des Hufbeschlags folgen. Zweckmässig ist auch, dass die perpendikulär bzw. stehend ausgerichteten Verstärkungsschichten in der Matrix im Wesentlichen bis unter die Lauffläche vordringen und ggf. diese teilweise bilden. Bei besonderer Beanspruchung der Lauffläche können die Verstärkungsschichten hier zusätzlichen Wiederstand gegen Abrieb bieten. Die Hufkontaktfläche kann im Wesentlichen als plane Fläche ausgeführt sein.

Wenn die Lauffläche im Wesentlichen zwei oder wenigstens zwei nebeneinander (insb. im Wesentlichen parallel nebeneinander) verlaufende, der U-förmigen Krümmung des Hufbeschlags folgende Laufflächenrippen aufweist, zwischen welchen eine Laufflächenfurche verläuft, ist es zweckmässig, dass die sich quer zu ihrer Längserstreckung im Wesentlichen jeweils von der Lauffläche (13) ausgehend zur Hufkontaktfläche (15) hin erstreckenden Verstärkungsschichten (bzw. die perpendikulär bzw. stehend ausgerichteten Verstärkungsschichten) in wenigstens eine erste Gruppe und eine zweite Gruppe aufgeteilt sind, wobei zumindest eine Verstärkungsschicht (31, 31') der ersten Gruppe in (bzw. innerhalb) der Matrix in die erste Laufflächenrippe (21) vordringt und zumindest eine Verstärkungsschicht (33, 33') der zweiten Gruppe in (bzw. innerhalb) der Matrix in die zweite Laufflächenrippe (23) vordringt. Es können zwischen den beiden Laufflächenrippen, insbesondere in der Laufflächenfurche verlaufen, Durchbrüche für Hufbeschlagnägel vorgesehen sein.

Optional kann zumindest eine weitere der Verstärkungsschichten im Wesentlichen parallel zur Hufkontaktfläche ausgerichtet sein. Zweckmässig ist, dass die oberste der parallel zur Hufkontaktfläche ausgerichteten Verstärkungsschichten in der Matrix im Wesentlichen bis unter die Hufkontaktfläche vordringt bzw. die Hufkontaktfläche bildet. Die zumindest eine parallel zur Hufkontaktfläche ausgerichtete Verstärkungsschicht beabstandet in (bzw. innerhalb) der Matrix die zur Hufkontaktfläche perpendikulär bzw. stehend ausgerichteten Verstärkungsschichten, d.h. die sich quer zu ihrer Längserstreckung im Wesentlichen jeweils von der Lauffläche ausgehend zur Hufkontaktfläche hin erstreckenden Verstärkungsschichten, von der Hufkontaktfläche.

Die Verstärkungsschichten können als Bandstrukturen oder Schlauchstrukturen vorliegen. D.h. die Verstärkungsschichten können aus Bänder oder Schläuchen erzeugt werden.

Vorteilhafterweise sind die Verstärkungsschichten im Wesentlichen aus Fasern (Faserschichten) gebildet, insbesondere aus flächigen Fasergebilden und/oder räumlichen Fasergebilden. Textile Fasergebilde sind zweckmässig. Fasern (bzw. Faserschichten), welche z.B. flächige oder räumliche Gebilde formen, liegen bevorzugt in geordneten textilen Strukturen vor, z.B. als Geflecht, Gewebe, Gelege, Gestrick und/oder Gewirk. Geflechte sind bevorzugt. Die Verstärkungsschichten, insbesondere Verstärkungsschichten aus Geflecht, Gewebe, Gelege, Gestrick und/oder Gewirk, sind im fertigen Hufbeschlag zweckmässigerweise von der Kunststoffmatrix durchdrungen. Bei den Fasern handelt es sich zweckmässigerweise im Wesentlichen um Langfasern bzw. Endlosfasern.

Von besonderem Vorteil ist es, wenn die Verstärkungsschichten als Band- oder Schlauchstrukturen vorliegen bzw. dass die Verstärkungsschichten mittels Bänder oder Schlauchbänder bzw. Schläuchen erzeugt sind, welche vorzugsweise aus Fasern gefertigt sind, wobei geflochtene Bänder oder geflochtene Schläuche bevorzugt sind. Für die Herstellung des Hufbeschlags können Bänder oder Schläuche verwendet werden, welche derartig strukturiert bzw. aufgebaut sind, dass beim Auseinanderziehen des Bandes oder Schlauches in seiner Längsrichtung sich der Band- oder Schlauchdurchmesser bzw. der Band- oder Schlauchquerschnitt verkleinert und folglich dass beim Stauchen (Zusammenschieben) des Bandes oder Schlauches in seiner Längsrichtung sich der Band- oder Schlauchdurchmesser bzw. der Band- oder Schlauchquerschnitt vergrößert. Geflochtene Bänder oder Schläuche können diese Eigenschaften aufweisen.

Die Verstärkungsschichten können aus flächigen Fasergebilden, wie z.B. Bandstrukturen bzw. Bänder, oder aus räumlichen Fasergebilden, wie z.B. Schlauchstrukturen bzw. Schläuche, erzeugt werden. Schlauchstrukturen werden bevorzugt.

Die Verstärkungsschichten, bzw. die Schlauchstrukturen oder Bandstrukturen, liegen somit vorzugsweise als textile Strukturen vor, welche im Wesentlichen aus Fasern oder vorzugsweise aus Fasersträngen gebildet sind. Textile Strukturen können z.B. als Geflecht, Gewebe, Gelege, Gestrick und/oder Gewirk vorliegen, wobei Geflechte bevorzugt sind.

Vorteilhafterweise ist das Geflecht, Gewebe, Gelege, Gestrick und/oder Gewirk im Wesentlichen aus Fasersträngen (sog. Rovings) gefertigt. Ein Faserstrang (sog. Roving) bestehen aus einer Vielzahl von Einzelfasern bzw. Einzelfilamenten. Bei den Einzelfasern bzw. Einzelfilamenten handelt es sich zweckmässigerweise um Langfasern oder Endlosfasern. Die Fasern können zum Beispiel ausgewählt sein aus der Gruppe bestehend aus Carbonfasern (auch Kohlenstofffasern oder Kohlefasern genannt), Polymerfasern wie z.B. Aramidfasern (d.h. Kevlarfasern), Glasfasern und Kombinationen davon, wobei Aramidfasern bevorzugt sind.

Das Material der Kunststoffmatrix ist bevorzugterweise duroplastisch bzw. ein Duroplast. Insbesondere ein ausgehärtetes Kunststoffharzsystem, z.B. erzeugt aus Epoxidharz oder Polyurethanharz, eignet sich als Matrix, wobei Epoxidharzsysteme besonders bevorzugt sind. Das Matrixmaterial wird im Herstellungsprozess während dem Aushärten normalerweise derart stark vernetzt, dass es sich nach dem Aushärten nicht mehr wesentlich umformen lässt (also zum Duroplast ausgehärtet ist).

Zweckmässig kann sein, dass die erste Gruppe der stehend ausgerichteten Verstärkungsschichten und/oder die zweite Gruppe der stehend ausgerichteten Verstärkungsschichten je wenigstens 2, bevorzugt wenigstens 4 nebeneinander geschichtete Verstärkungsschichten beinhaltet. Diese Anzahl von Verstärkungsschichten kann durch Einbettung von wenigstens 1 Schlauch bzw. wenigstens 2 Schläuchen pro Gruppe oder von wenigstens 2 Bänder bzw. wenigstens 4 Bänder erhalten werden. Es wird davon ausgegangen, dass jeder eingebettete Schlauch eine Doppelschicht, d.h. sozusagen zwei Verstärkungsschichten, bildet. Besonders zweckmässig kann sein, die erste Gruppe von wenigstens 4 nebeneinander geschichteten Verstärkungsschichten und/oder die zweite Gruppe von wenigstens 4 nebeneinander geschichteten Verstärkungsschichten aufgrund einer Einbettung von je Gruppe wenigstens 2 nebeneinander geschichteten Schläuchen zu erzeugen. Anstatt der je zwei Schläuche pro Gruppe könnten dafür alternativ z.B. 4 Bänder pro Gruppe verwendet werden.

In einer bevorzugten Ausführung handelt es sich bei den Verstärkungsschichten um eingebettete geflochtene Bänder oder Schläuche. Bänder oder Schläuche aus Aramidfasern, d.h. geflochtene Aramidbänder oder Aramidschläuche, sind besonders bevorzugt.

Vorteilig ist es, wenn zumindest die sich quer zu ihrer Längserstreckung im Wesentlichen jeweils von der Lauffläche ausgehend zur Hufkontaktfläche hin erstreckenden Verstärkungsschichten (bzw. die im Wesentlichen perpendikulär zur Hufkontaktfläche bzw. stehend ausgerichteten Verstärkungsschichten) von einem oder vorzugsweise mehreren Aramidbänder oder Aramidschläuchen gebildet sind. Vorteilig ist zudem, wenn die zumindest eine parallel zur Hufkontaktfläche ausgerichtete Verstärkungsschicht von einem oder mehreren Aramidbänder oder Aramidschläuchen gebildet ist. Optional können die im Wesentlichen parallel zur Hufkontaktfläche bzw. liegend ausgerichteten Verstärkungsschichten anstatt von einem oder mehr Aramidbänder oder Aramidschläuche von einem oder mehr Carbonbänder oder Carbonschläuche gebildet sein, wobei Aramid aufgrund seiner Materialeigenschaften jedoch bevorzugt wird.

In einer besonders vorteilhaften Ausführungsform kann der Hufbeschlag derart ausgeführt sein,
- dass hufkontaktflächenseitig zumindest eine weitere der Verstärkungsschichten derart angeordnet ist, dass sie im Wesentlichen parallel zur Hufkontaktfläche ausgerichtet ist, und dass vorzugsweise die im Wesentlichen parallel zur Hufkontaktfläche ausgerichtete Verstärkungsschicht bzw. die oberste der im Wesentlichen parallel zur Hufkontaktfläche ausgerichteten Verstärkungsschichten in der Matrix im Wesentlichen bis unter die Hufkontaktfläche vordringt bzw. die Hufkontaktfläche bildet, und
- dass die Verstärkungsschichten als textile Schlauchstrukturen oder als textile Bandstrukturen vorliegen, wobei die textilen Schlauchstrukturen bzw. die textilen Bandstrukturen aus Fasersträngen gefertigt sind, wobei jeder Faserstrang eine Vielzahl von Fasern beinhaltet. Textile Schlauchstrukturen werden gegenüber textilen Bandstrukturen bevorzugt.

In einer weiteren besonders vorteilhaften Ausführungsform kann der Hufbeschlag derart ausgeführt sein,
- dass die Verstärkungsschichten als aus Fasersträngen (sogenannten Rovings) geflochtene Schlauchstrukturen vorliegen, und
- dass jeder Faserstrang einer geflochtenen Schlauchstruktur in einer Abfolge abwechselnd über ihn kreuzende Faserstränge hinweg und unter ihn kreuzende Faserstränge hindurch verläuft, wobei sich jeder Faserstrang mit den jeweils ihn kreuzenden Fasersträngen in einem gewissen Winkel kreuzt, wobei gleichzeitig alle Faserstränge mit der Schlauchlängsrichtung einen Fadenwinkel bilden, welcher im Wesentlichen der Hälfte des vorgenannten gewissen Winkels entspricht.

Vorzugsweise ist der genannte gewisse Winkel ein spitzer Winkel, d.h. ein Winkel kleiner als 90 Grad. Insbesondere bevorzugt ist ein Winkel von kleiner als 85 Grad, weiter bevorzugt ein Winkel im Bereich von 46 Grad (insb. 46°±10°).

Zweckmässigerweise ist ein Abriebschutzelement vorzugsweise hufbeschlagerstreckungsmittig in der Kunststoffmatrix eingebettet. Zwecks verbesserter Rutschfestigkeit kann vorteilhaft sein, wenn sich das Abriebschutzelement laufflächenseitig gegebenenfalls zumindest teilweise aus der Kunststoffmatrix erhebt (zumindest beim frisch hergestellten Produkt). Zweckmässigerweise weist das Abriebschutzelement die Form zweier gekrümmter, nebeneinander (insb. im Wesentlichen parallel nebeneinander) angeordneter Stege, welche der U-förmigen Krümmung des Hufbeschlags folgen und welche innerhalb der Kunststoffmatrix vorzugsweise über eine Brücke verbunden sind, auf.

Vorteilhafterweise ist das Abriebschutzelement durch zumindest eine Verstärkungsschicht (d.h. z.B. durch zumindest ein Band oder durch zumindest einen Schlauch), welche zwischen den Stegen der Brücke entlang verläuft, in den Hufbeschlag eingebunden. Dies gibt einem Hufbeschlag mit eingebettetem Abriebschutzelement besonders gute Haltbarkeit und Schutz vor Ausreissen des Abriebschutzelements.

Die Kunststoffmatrix kann durch ein Vakuumpressverfahren in die mit den Schichten ausgelegte Form eingesogen werden, insbesondere indem das flüssige Vorprodukt in eine Giessform eingegossen wird. Die Verstärkungsstrukturen können zum Beispiel zuvor in die Giessform eingelegt werden und werden damit beim Eingiessen des Matrixvorprodukts gegebenenfalls durchtränkt.

Ein besonders vorteiliges Herstellungsverfahren für einen oben beschriebenen Hufbeschlag beinhaltet vorzugsweise zumindest die folgenden Schritte:
- Bereitstellen einer Werkzeugform mit im Wesentlichen ebener Arbeitsfläche, in welcher eine in der Ebene der Arbeitsfläche hufbeschlagförmig (d.h. U-förmig gekrümmt) ausgestaltete Kavität ausgeformt ist. Diese Kavität zeigt also in der Arbeitsfläche ihre hufbeschlagförmige Kontur, wobei die Hufbeschlagform, d.h. die U-förmige Krümmung der Kavität durch Innenkonturwände definiert ist.
- Befüllen der Kavität mit mehreren Verstärkungsschichten, wie z.B. Bändern oder Schläuchen, indem diese in ihrer Längserstreckung der U-förmigen Krümmung der Kavität folgend und quer zu ihrer Längserstreckung im Wesentlichen perpendikulär zur Arbeitsfläche ausgerichtet, d.h. insbesondere stehend (bzw. in ihrer Breite stehend), in die Kavität eingesetzt werden. Dadurch ordnen sich die Verstärkungsschichten derart in der Kavität an, dass sie sich quer zu ihrer Längserstreckung im Wesentlichen jeweils von der Lauffläche (13) ausgehend zur Hufkontaktfläche (15) hin erstrecken.
- Optionales Befüllen der Kavität mit einer oder mehreren weiteren Verstärkungsschichten, wie z.B. Bändern oder Schläuchen, indem diese über den zuvor stehend eingelegten

Verstärkungsschichten ausgelegt werden, dass sie in ihrer Längserstreckung ebenfalls der U-förmigen Krümmung der Kavität folgend im Wesentlichen parallel zur Arbeitsfläche ausgerichtet sind.
- Eintragen eines Kunststoffs, insb. eines aushärtbaren Kunststoffsystems, in die mit den genannten Verstärkungsschichten bestückte Kavität.

Zweckmässigerweise wird, bevor ein aushärtbares Kunststoffsystem in die Kavität eingetragen wird, die Kavität mit einem Deckel geschlossen, wodurch ein Formhohlraum entsteht.

Das Eintragen des Kunststoffs bzw. des aushärtbaren Kunststoffsystems erfolgt zweckmässigerweise durch Unterdruck im Formhohlraum, durch Aufbringen eines Einspritzdrucks oder eine Kombination von Unterdruck im Formhohlraum und Aufbringen eines Einspritzdrucks.

Um ein Kunststoff bzw. ein aushärtbares Kunststoffsystems in die mit den genannten Verstärkungsschichten bestückte Kavität einzutragen, wird die Kavität bzw. der Formhohlraum zweckmässigerweise evakuiert, insbesondere nachdem die Kavität mit einem Deckel verschlossen wurde. Dadurch wird im Formhohlraum ein Unterdruck bzw. Vakuum erzeugt. Das Evakuieren kann dazu dienen, Lufteinschlüsse zu verringern bzw. möglichst zu vermeiden. Werden Lufteinschlüsse im Material verringert, kann dadurch auch die Bruchgefahr des Materials verringert werden.

In der Kavität können stiftartige Erhebungen angeordnet sein, welche dazu dienen Nagellöcher im herzustellenden Hufbeschlag zu formen.

Zweckmässigerweise kann ein Abriebschutzelement in die Kavität der Werkzeugform eingelegt werden. Vorteilhafterweise kann in der Kavität eine Vertiefung zur Aufnahme des Abriebschutzelements ausgeformt sein. Insoweit diese Vertiefung Laufflächenseitig vorliegt, kann das Abriebschutzelement im fertigen Hufbeschlag über die Lauffläche vorstehen und dadurch zusätzlich Halt bieten, insbesondere um ein Rutschen nach frischem Beschlagen zu vermeiden.

Das Abriebschutzelement ist zweckmässigerweise in der Kavität, vorzugsweise an wenigstens einer oder zwei Erhebungen, fixierbar, sodass dieses beim Befüllen des Formhohlraums nicht verrutscht. Praktischerweise können für diesen Zweck zum Beispiel die Erhebungen dienen, welche zur Formung von Nagellöchern im Hufbeschlag vorgesehen und damit eh vorhanden sind. In diesem Fall weist das Abriebschutzelement zweckmässigerweise Strukturen, wie z.B. Lochstrukturen, auf, mittels welcher sich das Abriebschutzelement an den Erhebungen zur Nagellochformung aufstecken lässt.

Die im Folgenden angeführten vorteilhaften Ausführungsvarianten führen allein oder in Kombination miteinander zu weiteren Verbesserungen des erfindungsgemässen Gegenstands.

### KURZE FIGURENBESCHREIBUNG

Weitere Vorteile und Merkmale des erfindungsgemässen Hufbeschlags ergeben sich aus der nachfolgenden Beschreibung eines Ausführungsbeispiels der Erfindung unter Bezugnahme auf schematischen Darstellungen. Genannte bevorzugte Merkmale können in beliebiger Kombination verwirklicht werden - soweit sie sich nicht gegenseitig ausschliessen. Es zeigen in nicht massstabsgetreuer, schematischer Darstellung:
- Figur 1:: eine hufseitige Durchsichtansicht eines allgemeinen Hufbeschlags;
- Figur 2:: eine laufflächenseitige Ansicht eines allgemeinen Hufbeschlags;
- Figur 3:: eine kombinierte Durchsicht- und Querschnittsansicht eines Hufbeschlags mit laufflächenseitiger Profilierung;
- Figur 4:: eine Ansicht eines Querschnitts einer erfindungsgemässen Ausführung eines Hufbeschlags, wie er beispielhaft hufbeschlagmittig (d.h. an der Schnittstelle B-B der Fig. 3) vorliegt oder in ähnlicher Art bis in die Schenkelendbereiche vorliegen kann;
- Figur 5: eine Ansicht eines Querschnitts einer alternativen erfindungsgemässen Ausführung eines Hufbeschlags, wie er beispielhaft hufbeschlagmittig (d.h. an der Schnittstelle B-B der Fig. 3) vorliegt oder in ähnlicher Art bis in die Schenkelendbereiche vorliegen kann;
- Figur 6: Abriebschutz in perspektivischer Ansicht;
- Figur 7: Abriebschutz in drei Ansichten;
- Figur 8: ein erfindungsgemässer Hufbeschlag mit Abriebschutzeinlage in drei Ansichten;
- Figur 9: ein Beispiel eines Schlauchgeflechts, (a) unter oder nach Zug in kompaktem Zustand, (b) in leicht zusammengestauchtem Zustand.

### DETAILIERTE BESCHREIBUNG DER FIGUREN

Im Folgenden stehen gleiche Bezugsziffern für gleiche oder funktionsgleiche Elemente in gleichen oder unterschiedlichen Figuren.

Im Folgenden werden ein Hufbeschlag für Pferde im Allgemeinen sowie ein erfindungsgemässer Hufbeschlag beschrieben. Ein Hufbeschlag für Pferde ist insbesondere ein Hufschutz, welcher an den Pferdehuf, insbesondere von der Hufunterseite her an der Hufwand mittels einer Vielzahl von Nägeln und/oder mittels eines Klebstoffs befestigt wird.

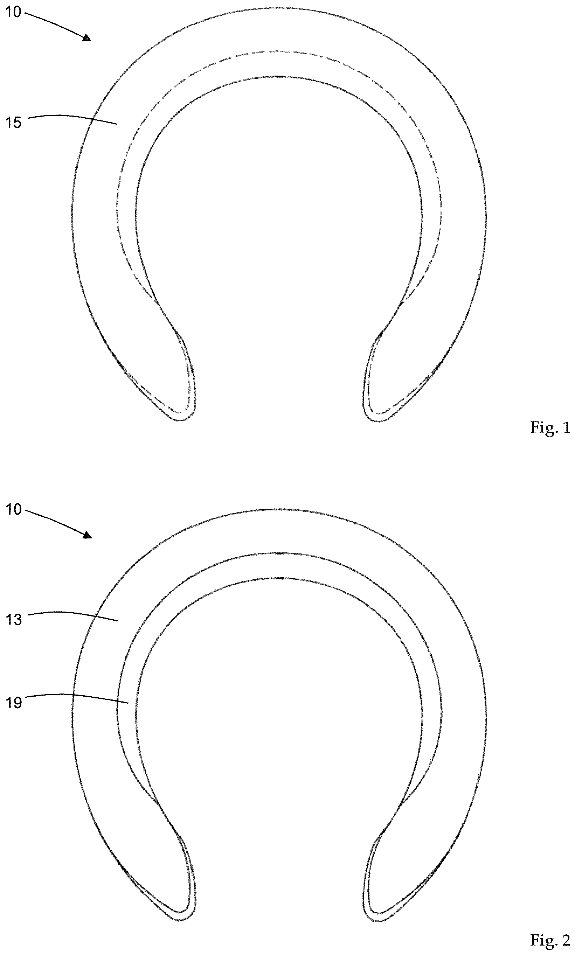

Die Figuren 1 und 2 zeigen eine allgemeine schematische Darstellung eines Hufbeschlags 10 in Oberansicht (Fig. 1) und Unteransicht (Fig. 2). In der Oberansicht (Fig. 1) ist der Hufbeschlag 10 von der Hufkontaktfläche 15 her, d.h. von oben, zu sehen. In der Unteransicht (Fig. 2) ist der Hufbeschlag 10 von der Lauffläche 13 her, d.h. von unten, zu sehen. Ein typischer Hufbeschlag 10 ist teilringförmig bzw. U-förmig gebogen mit zwei nach hinten auslaufenden seitlichen Schenkeln und einem in Laufrichtung weisenden, die Schenkel verbindenden, vorderen Bereich. Ein Hufbeschlag weist zwei im Wesentlichen U-förmige, einander gegenüberliegend voneinander abgewandte Seiten auf. Die erste ist die Lauffläche 13, die zweite ist die Hufkontaktfläche 15. Eine im Wesentlichen umlaufende Wandung führt im Wesentlichen von der U-förmige Lauffläche 13 auf die U-förmige Hufkontaktfläche 15 über. Die Wandung ist im Wesentlichen aufgeteilt in eine Beschlagaussenseite 17 und eine Beschlaginnenseite 18. Die Lauffläche 13 kann gegenüber der Hufkontaktfläche 15 im U-förmigen Verlauf eine geringere Breite aufweisen, z.B. indem die Hufbeschlaginnenseite 18 von der Lauffläche 13 her zumindest teilweise als in einer konkaven Krümmung zurückweichende Fläche 19 ausgebildet ist.

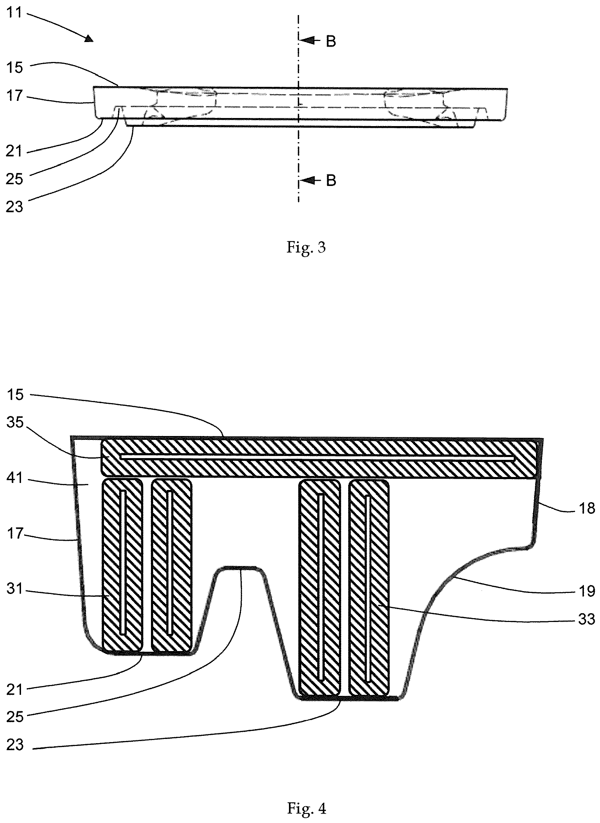

Üblicherweise ist die Lauffläche 13 profiliert, z.B. bei mit Nägeln zu befestigenden Hufbeschlägen zumindest in dem Sinne, dass Vertiefungen und Durchbrüche für Hufnägel vorgesehen sind. In einem hier beschriebenen Beispiel ist eine Laufflächenprofilierung in der Querschnittansicht der Fig. 3 dargestellt. Hier teilt eine Furche 25, welche dem U-förmigen Verlauf der Laufflächenerstreckung folgt, die Lauffläche 13 im Wesentlichen in zwei parallel ebenfalls U-Förmig verlaufende Rippen, insbesondere eine innere Rippe 23 und eine äussere Rippe 21. Die innere Rippe 23 kann dabei Laufflächenseitig höher ausgebildet sein als die äussere Rippe 21 bzw. überragt die äussere Rippe 21 sozusagen. Ein Vorteil eines derartigen Unterschieds der Rippenhöhe liegt darin, dass beim Laufen ein gewisses Mass an Abrollen möglich ist. Zudem kann eine derartige Profilierung abhängig von den Bodeneigenschaften den Halt auf dem Untergrund verbessern. In der Furche 25 können Durchbrüche zum setzten von Hufnägeln vorgesehen sein. Eingesetzte Nägel sind dabei vorzugsweise in der Furche 25 versenkt, insbesondere bevorzugt im Wesentlichen unter eine die beiden Profilhöhen der Rippen 21, 23 verbindende imaginäre Linie bzw. Fläche, bis zu welcher sich Hufnägel normalerweise eingeschlagen lassen.

Der erfindungsgemässe Hufbeschlag besteht aus einem Faser-Kunststoff-Verbund, wobei aus Fasern gefertigte Verstärkungsschichten in einer Kunststoffmatrix eingebettet sind und vorzugsweise von dieser durchdrungen sind. Bei den Schichten handelt es sich dabei zweckmässigerweise um textile Schichten, besonders bevorzugt um Geflechte.

Schichten und Matrix im Verbund verbessern und/oder verstärken die jeweiligen Materialeigenschaften hinsichtlich des Gebrauchs als Hufbeschlag. Die Art und Weise der räumlichen Schichtanordnung hat sich als eigenschaftsbeeinflussend erwiesen. Vorteilhafterweise ermöglicht die erfindungsgemässe Schichtanordnung belastungsabhängig ein gewisses Mass an Spreizung des Hufbeschlags (z.B. bei Querbeschleunigungen des Pferdes, wie sie in Kurven entstehen). Gleichzeitig wiedersteht ein erfindungsgemässer Hufbeschlag den bei Gebrauch entstehenden Seitendrücken.

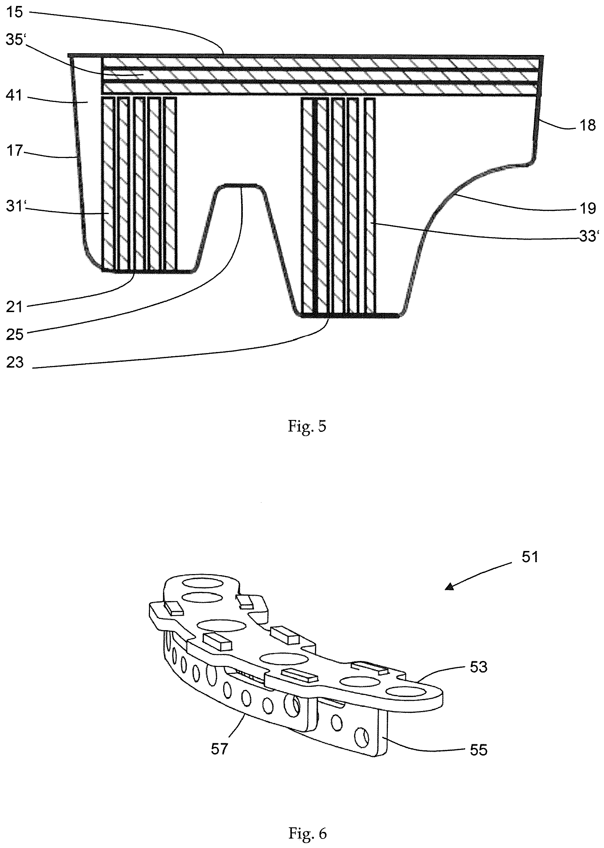

In Fig. 4 und Fig. 5 schematisch dargestellt ist je ein Beispiel eines erfindungsgemässen Hufbeschlagquerschnitts mit in Polymermatrix 41 eingebetteten Schichtstrukturen. Diese Ansicht ist ein Querschnitt eines erfindungsgemässen Hufbeschlags, wie er beispielhaft hufbeschlagmittig (an der Schnittstelle B-B der Fig. 3) vorliegt oder in ähnlicher Art bis in die Schenkelendbereiche vorliegen kann. Insbesondere sind in der Polymermatrix 41 zum einen Verstärkungsschichten 31, 31' und 33, 33' in näherungsweise bzw. im Wesentlichen senkrechter Ausrichtung zur Hufkontaktfläche 15 und zum anderen Verstärkungsschichten 35, 35' in im Wesentlichen paralleler Ausrichtung zur Hufkontaktfläche 15 eingebettet. Verstärkungsschichten sind damit in voneinander unterscheidbaren Gruppen angeordnet. Die senkrecht zur Hufkontaktfläche 15 ausgerichteten Verstärkungsschichten 31 und 33 bzw. 31' und 33' bilden eine erste Gruppe. Die parallel zur Hufkontaktfläche 15 ausgerichteten Verstärkungsschichten 35 bzw. 35' bilden eine zweite Gruppe. Die erste Gruppe der Verstärkungsschichten verstärkt insgesamt den Hufbeschlag laufflächenseitig, indem die Verstärkungsschichten 31 und 33 bzw. 31' und 33' bis zur Lauffläche vordringen bzw. die Laufflächenprofilierung formen, während die zweite Gruppe der Verstärkungsschichten den Hufbeschlag hufseitig verstärken, indem die Verstärkungsschichten 35 bzw. 35' der Hufkontaktfläche unterliegen bzw. diese formen. Es kann gesagt werden, dass über den Querschnitt des Hufbeschlags gesehen die erste Gruppe von Verstärkungsschichten 31 und 33 bzw. 31' und 33' im Wesentlichen stehend eingebettet ist und eine zweite Gruppe von ein oder mehreren Verstärkungsschichten 35 bzw. 35' im Wesentlichen liegend eingebettet ist. Beide Gruppen unterscheiden sich damit über den Querschnitt gesehen in Ausrichtung und örtlicher Anordnung der Schichten. In ihrer Längserstreckung verlaufen alle Verstärkungsschichten, d.h. die stehenden Schichten, 31, 33 bzw. 31', 33', sowie die liegenden Schichten, 35 bzw. 35', der Krümmung des Hufbeschlags angepasst bzw. folgend in U-förmiger Krümmung. Stehend bedeutet hierbei insbesondere, dass die Verstärkungsschichten 31 und 33 bzw. 31' und 33' derart angeordnet sind, dass sie sich quer zu ihrer Längserstreckung vorwiegend jeweils von der Lauffläche ausgehend zur Hufkontaktfläche hin bzw. in Richtung zur Hufkontaktfläche erstrecken. Liegend bedeutet hierbei insbesondere, dass die Verstärkungsschichten 35 bzw. 35' derart angeordnet sind, dass sie vorwiegend jeweils parallel zur Hufkontaktfläche angeordnet sind bzw. sich im Wesentlichen jeweils parallel zur Hufkontaktfläche erstrecken.

Die zweite Gruppe der Verstärkungsschichten 35 bzw. 35' grenzt in flächenparalleler Ausrichtung an die Hufkontaktfläche 15 an. Dabei bildet die oberste Verstärkungsschicht der Gruppe im Wesentlichen die Hufkontaktfläche 15.

Die erste Gruppe der Verstärkungsschichten 31 und 33 bzw. 31' und 33' dringt mittels der längsseitigen Randbereiche der Verstärkungsschichten bis zur Lauffläche bzw. insbesondere in die Laufflächenrippen 21, 23 vor. Dabei bilden die längsseitigen Ränder eines ersten Teils der ersten Gruppe der Verstärkungsschichten 31 bzw. 31' im Wesentlichen die vordere d.h. äussere Rippe 21 und die längsseitigen Ränder eines zweiten Teils der ersten Gruppe der Verstärkungsschichten 33 bzw. 33' im Wesentlichen die hintere d.h. innere Rippe 23. Die längsseitigen Schichtränder verlaufen somit - der U-förmigen Krümmung des Hufbeschlags folgend und damit der U-förmigen Krümmung der jeweiligen Rippe folgend - rippenparallel innerhalb der jeweiligen Rippe 21, 23. Insgesamt bilden die längsseitigen Randbereiche der Verstärkungsschichten 31 und 33 bzw. 31' und 33' einen wesentliche Anteile der Lauffläche 13. Ein erster Teil der Gruppe der senkrecht zur Hufkontaktfläche 15 ausgerichteten Verstärkungsschichten 31 bzw. 31' erstreckt sich innerhalb der äusseren Rippe 21 bzw. bildet die äussere Rippe 21 und ein zweiter Teil der Gruppe von senkrecht zur Hufkontaktfläche 15 ausgerichteten Verstärkungsschichten 33 bzw. 33' erstreckt sich innerhalb der inneren Rippe 23 bzw. bildet die innere Rippe 23. Insgesamt bilden und/oder stützen die senkrecht ausgerichteten (d.h. die stehenden) Verstärkungsschichten die Rippen 21 und 23.

Die in Fig. 4 und Fig. 5 gezeigten Darstellungen hinsichtlich der Verteilung und Anordnung der Schichten ist lediglich eine unvollständige, schematische Darstellung. Schichtfreie Regionen sind in der Praxis nicht so ausgeprägt wie in Fig. 4 und Fig. 5 gezeigt oder gar nicht vorhanden. Aufgrund des weiter unten vorgestellten Herstellungsverfahrens verteilen sich die Verstärkungsschichten vielmehr über die Breite der zur Verfügung stehenden Querschnitterstreckung. Insbesondere die in den Rippen eingebetteten Schichtrandbereiche verteilen sich über die jeweilige zur Verfügung stehende Rippenbreite, während sich die dazu im Wesentlichen entgegengesetzt gerichteten Schichtrandbereiche, welche in Nähe der Hufkontaktfläche eingebettet sind, sich über die zur Verfügung stehende Gesamtbreite von der Beschlagaussenseite 17 bis zur Beschlagsinnenseite 18 verteilen. Die beiden Teilgruppen von Verstärkungsschichten, welche die äussere Rippe 21 oder die innere Rippe 23 bilden, sind hufkontaktflächennah in der Praxis nicht unbedingt voneinander beabstandet (wie es in der schematischen Darstellung den Anschein hat) sondern die Verstärkungsschichten vorzugsweise füllen bzw. verteilen sich über den gesamten Hufbeschlagquerschnitt von der Beschlagaussenseite 17 bis zur Beschlagsinnenseite 18 in einer regelmässigen Aufreihung der Verstärkungsschichten, wobei die Schichtanteile in den Rippen (bzw. nahe der Lauffläche 13) relativ dicht aneinander gepackt sind, während die Schichtanteile umso weiter sie von der Lauffläche entfernt sind ggf. weniger dicht aneinander gepackt sein können und sich über die Breite des Querschnitts verteilen.

Die Verstärkungsschichten 31, 33, 35 bzw. 31', 33', 35' sind vorzugsweise aus textilen Strukturen aufgebaut. Vorzugsweise aus geordneten textilen Strukturen; solche sind zum Beispiel geflochten, gewoben, gestrickt, gewirkt, gelegt etc. Besonders bevorzugte Verstärkungsschichten bestehen aus geflochtenen Schichtstrukturen. Geeignete textile Strukturen sind z.B. als Band oder Schlauch erhältlich. Zur Erzeugung eines erfindungsgemässen Hufbeschlags aus Faser-Kunststoff-Verbund können derartige Bänder oder Schläuche in eine hufbeschlagförmige Kavität eingelegt und daraufhin in Kunststoffmatrix eingebettet werden. Daraus ergeben sich Hufbeschlagstrukturen wie hier anhand von Fig. 4 und Fig. 5 dargestellt.

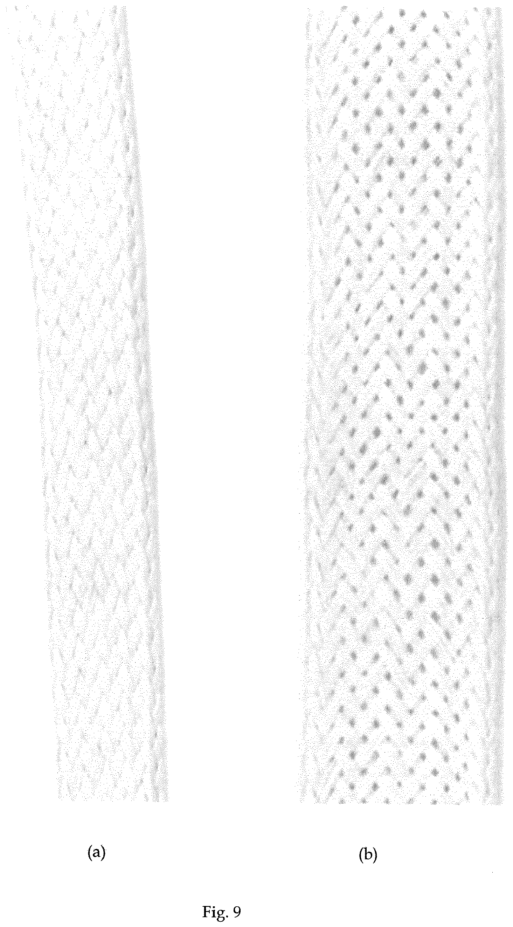

Zur Herstellung einer erfindungsgemässer Ausführung (ähnlich wie in Fig. 4 schematisch dargestellt) werden z.B. textile Schläuche 31, 33, 35 in sozusagen platt gedrückter Ausführung quasi als Doppelschichten in eine Hufbeschlagform eingelegt. In Fig. 9 ist beispielsweise ein geflochtener Schlauch gezeigt. Der Schlauch ist aus Fasersträngen (sogenannten Rovings) geflochten. Jeder Faserstrang besteht aus einer Vielzahl von Fasern, insbesondere im Wesentlichen Langfasern oder Endlosfasern. Das im Schlauch verwendete Fasermaterial ist zweckmässigerweise im Wesentlichen nicht dehnbar bzw. nicht kompressibel. Im hier gezeigten Geflecht verläuft jeder Faserstrang in einer Abfolge abwechselnd über zwei ihn kreuzende Fasersträngen hinweg und unter zwei ihn kreuzende Faserstränge hindurch, wobei sich der genannte Faserstrang mit den jeweils ihn kreuzenden Fasersträngen in einem gewissen Winkel, kreuzt, wobei gleichzeitig alle Faserstränge mit der Schlauchlängsrichtung einen Winkel (d.h. Fadenwinkel) bilden, welcher etwa der Hälfte des vorgenannten gewissen Winkels, entspricht. Der genannte gewisse Winkel ist vorzugsweise ein spitzer Winkel, d.h. ein Winkel von 90 Grad oder bevorzugt kleiner als 90 Grad, insbesondere bevorzugt ein Winkel von kleiner als 85 Grad, weiter bevorzugt ein Winkel im Bereich von 46 Grad (insb. 46°±10°). Der Fadenwinkel ist demnach vorzugsweise 45 Grad oder bevorzugt kleiner als 45 Grad, insbesondere bevorzugt ein Winkel von kleiner als 42,5 Grad, weiter bevorzugt ein Winkel im Bereich von 23 Grad (insb. 23°±5°).

Derartig geflochtene Schläuche zeichnen sich z.B. dadurch aus, dass sich der Schlauchdurchmesser beim Zusammenschieben des Schlauchs entlang seiner Längsachse vergrößert, indem die Faserstränge sich voneinander entfernen, bzw. beim Langziehen wieder verkleinert (Fig. 9 (a) und (b)), indem die Faserstränge sich aneinanderschmiegen bis die maximale Packungsdichte erreicht ist. Unter Zug bildet das beschriebene Schlauchgeflecht ein besonders dichtes und stabiles Gebilde. Bei einem Schlauchgeflecht der beschriebenen Art verkleinert sich der oben genannte gewisse Winkel unter zunehmendem längsgerichtetem Zug. Das Band bzw. der Schlauch ist derart geflochten, dass sich sein Durchmesser beim Zusammenschieben vergrößert bzw. beim Auseinanderziehen verkleinert, obschon das Fasermaterial oder Fadenmaterial, aus welchem das Band oder der Schlauch gefertigt ist, selbst im Wesentlichen nicht dehnbar oder kompressibel ist.

Die Fasern sind bevorzugterweise in ein Geflecht verarbeitet. Der Faser-Kunststoff-Verbund ist damit bevorzugt ein mit geflochtenen Schichten, insb. geflochtenen Bändern oder geflochtenen Schläuchen verstärkter Kunststoff.

Der Faser-Kunststoff-Verbund beinhaltet Fasern, welche zweckmässigerweise ausgewählt sind aus der Gruppe bestehend aus Carbonfasern (auch Kohlenstofffasern oder Kohlefasern genannt), Polymerfasern wie z.B. Aramidfasern (z.B. Kevlarfasern), Glasfasern und Kombinationen davon. Aramidfasern werden bevorzugt, weil damit ein Hufbeschlag erzielt wird, der insgesamt wenig Abrieb und gleichzeitig gute Schlagfestigkeit zeigt, also besonders widerstandsfähig ist.

Der Matrixwerkstoff wird vorzugsweise aus einem Harz ausgewählt, welches zu einem duroplastischen Kunststoff umgesetzt werden kann. Das Material für die Kunststoffmatrix, ist insbesondere ausgewählt aus der Gruppe der Epoxidharze oder der vernetzbaren Polyurethane. Bevorzugt ist ein Epoxidharz, welches sich insb. zum Duroplast aushärten lässt. Der Hufbeschlag besteht somit vorzugsweise aus einem faserverstärkten Duroplast, d.h. Verstärkungsschichten aus Fasermaterial eingebettet in einer Duroplastmatrix.

Somit beinhaltet eine besonders bevorzugte Ausführungsform eines erfindungsgemässen Hufbeschlags eine Schichtung aus schlauchförmigen Fasergeflechtstrukturen (insb. Aramidfasergeflecht) in einer Duroplastmatrix (insb. duroplastische Epoxiharzmatrix), wobei die Schläuche der U-förmigen Krümmung des Hufbeschlags folgend, plattgedrückt in Bezug auf die Lauffläche im Wesentlichen stehend und die Lauffläche bildend eingebettet sind. Die Schlauchschichtung weist dabei in wenigstens einer Gruppe von wenigstens vier geschichteten Schläuchen eine Schichtungsnormale auf, welche über den gesamten Verlauf der Erstreckung der Schläuche entlang der U-förmigen Krümmung des Hufbeschlags im Wesentlichen parallel zur Hufkontaktfläche ausgerichtet ist.

In einem bevorzugten Ausführungsbeispiel bestehen die Schläuche aus geflochtenen Fasersträngen (Fig. 9). Ein Faserstrang (oder auch Roving genannt) besteht typischerweise aus 1000 bis 3000 Einzelfasern (auch Einzelfilamente genannt). Bevorzugt sind die Schläuche mit einem Fadenwinkel von kleiner als 45 Grad, vorzugsweise im Bereich von ca. 23 Grad (insb. 23°±5°) geflochten (Fig. 9 (a)). Zusammen mit den Aramidschläuchen können auch Carbonschläuche verwendet werden.

In einem bevorzugten Verfahren wird der Hufbeschlag in einem Vakuumpressverfahren erzeugt, wobei Faserstrukturgebilde in eine vorgefertigte U-förmige Negativform eingelegt werden und die Kunststoffmatrix durch Einbringen eines aushärtenden Kunststoffs oder eines aushärtenden Kunststoffsystemgemisches erzeugt wird.

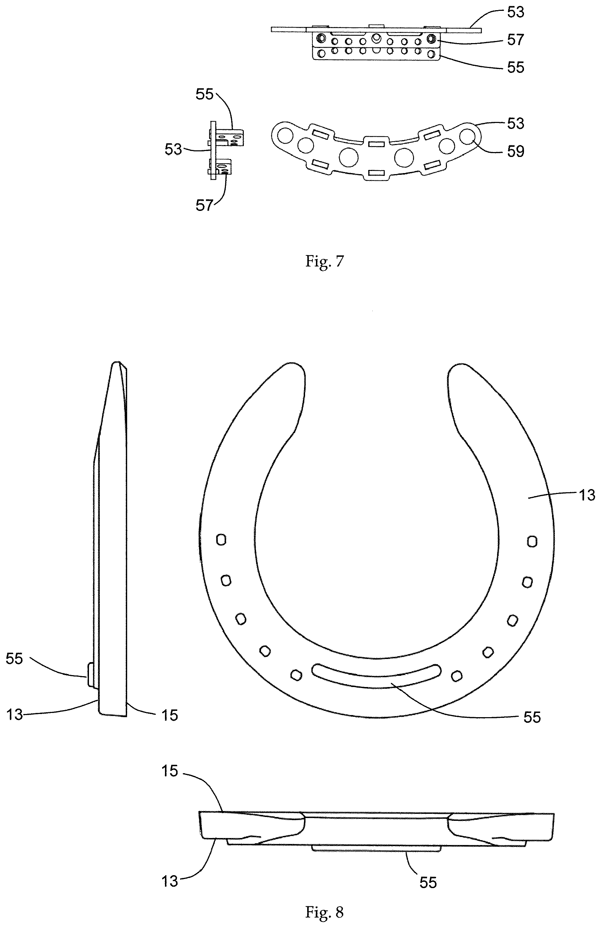

In Figur 6 und Figur 7 ist ein Abriebschutz 51 dargestellt, welcher zusätzlich mit den Verstärkungsschichten in den Hufbeschlag eingebettet sein kann. Die Form des Abriebschutzes ist insgesamt vorzugsweise einem mittigen Abschnitt des Hufbeschlags angepasst und weist daher insgesamt eine Krümmung auf. Der Abriebschutz beinhaltet vorzugsweise eine Grundplatte 53, auf welcher zwei parallel zueinander ausgerichtete Stege, d.h. ein innerer bzw. hinterer Steg 55 und ein äusserer bzw. vorderer Steg 57, fixiert oder angeformt sind. Die Stege 55, 57 sind vorzugsweise als gekrümmte längliche Platten ausgeführt, was insgesamt die vorgenannte generelle Krümmung des Abriebschutzes ausmacht. Beide Stege 55, 57 sind im Wesentlichen über jeweils einen ihrer langen Ränder in senkrechter Ausrichtung zur Grundplatte 53 auf dieser fixiert. Die Grundplatte 53 ist im Wesentlichen als flache Platte ausgeführt. Die Ränder der Grundplatte 53 können eine Kontur aufweisen, welche der Krümmung der auf ihr in gegenseitig paralleler Ausrichtung fixierten Stege 55, 57 angepasst ist. Grundplatte 53 und Stege 55, 57 sind derart bemessen, dass eingebettet im Hufbeschlag die Stege laufflächenseitig von innerhalb des Hufbeschlags bis ungefähr zur Lauffläche 13 vorragen oder diese leicht überragen. Insbesondere für einen Hufbeschlag mit einer profilierten Lauffläche, wie sie in Fig. 3 gezeigt ist, sind der erste und der zweite Steg gegebenenfalls unterschiedlich hoch ausgelegt. Zweckmässigerweise überragt zumindest der Rand des hinteren Stegs 57 die Lauffläche bzw. die hintere Laufflächenrippe 23, wie in Fig. 8 gezeigt, z.B. um ca. 1 mm. Dies hat den Vorteil, dass auch ein frisch beschlagenes Pferd sofort einen zufriedenstellenden Halt auf dem Untergrund findet, denn die Oberfläche des Verbundmaterials des Hufbeschlags ist zu Beginn glatt und rutschig, bevor mit Gebrauch die Oberfläche aufraut und besseren Halt bietet.

Die Grundplatte 53 des Abriebschutzes kann mit Löchern 59 oder anderen Strukturen versehen sein, welche ein Einsetzen und Fixieren des Abriebschutzes 51 in einer Kavität einer Werkzeugform erlauben.

Verstärkungsschichten bzw. -bänder oder -schläuche sind im Hufbeschlag vorzugsweise im Wesentlichen über, unter, vor und hinter dem Abriebschutz verlegt, sodass der Abriebschutz möglichst gut im Hufbeschlag integriert und fixiert ist. Insbesondere können eine, zwei oder mehrere Verstärkungsschichten bzw. -bänder oder -schläuche zwischen den zwei Stegen 55, 57 an der Grundplatte 53 entlang geführt sein, wodurch der Abriebschutz laufflächenseitig besonders gut in den Hufbeschlag integriert und fixiert ist, indem dadurch im Hufbeschlag zwischen Grundplatte 53 des Abriebschutzes und der Hufbeschlaglauffläche zumindest eine Verstärkungsschicht bzw. ein Verstärkungsband oder Verstärkungsschlauch verläuft.

Nachfolgend wird die Erfindung anhand eines Beispiels erläutert.

### AUSFÜHRUNGSBEISPIELE

Ein bevorzugtes Herstellungsverfahren für einen Hufbeschlag beinhaltend zumindest die folgenden aufeinanderfolgenden Schritte:
- Bereitstellen einer Werkzeugform (Negativform) mit U-förmiger Kavität in einer im Wesentlichen horizontalen Arbeitsfläche, wobei die Kavität nach oben hin offen ist und deren U-Form durch Innenkonturwände definiert ist. Insofern der herzustellende Beschlag zumindest eine Furche aufweisen soll, ist die Werkzeugform mit einer Furchenaussparungskontur, d.h. einer mittig in der U-förmigen Kavität U-förmig verlaufenden Erhebung) ausgestattet. Insofern der herzustellende Beschlag Aussparungen für Hufnägel aufweisen soll, ist die Werkzeugform mit mehreren mittig in der U-förmigen Kavität auf einer U-förmig verlaufenden Linie verteilten stiftartigen Erhebungen ausgestattet, welche sich vom Kavitätsgrund der Furchenerhebung bis auf Höhe der Arbeitsfläche erheben.
- Optional Einsetzen eines Abriebschutzes.
- Einsetzen einer Mehrzahl plattgedrückter Schläuche (31, 33) oder Bänder (31', 33') in die Kavität, derart dass diese in Ihrer Längserstreckung der U-förmigen Krümmung der Kavität folgen und dabei in ihrer Quererstreckung im Wesentlichen vertikal ausgerichtet (bzw. stehend) aneinandergereiht sind. Insoweit eine Furchenaussparungskontur in der Werkzeugform vorhanden ist, fusst dabei ein erster Teil der Mehrzahl der plattgedrückten Schläuche (31) bzw. der Bänder (31') auf der einen Seite der Furchenaussparungskontur und der zweite Teil der Mehrzahl der plattgedrückten Schläuche (33) bzw. der Bänder (33') auf der anderen Seite der Furchenaussparungskontur.
- Optional Auslegen eines oder mehrerer weiterer plattgedrückter Schläuche (35) oder Bänder (35') in der Werkzeugform über der zuvor vertikal eingesetzten Mehrzahl plattgedrückter Schläuche (31, 33) bzw. Bänder (31', 33'), derart dass die ein oder mehreren weiterer plattgedrückter Schläuche (35) bzw. Bänder (35') im Wesentlichen in ihrer Quererstreckung horizontal ausgelegt der U-förmigen Krümmung folgen und, insoweit es sich um mehrere dieser weiteren Schläuche (35) bzw. Bänder (35') handelt, diese vorzugsweise horizontal aufeinandergelegt werden.
- Schliessen der Kavität mittels Deckel, welcher kraftdicht mit der Werkzeugform verpresst wird, z.B. durch Verschrauben von Deckel und Werkzeugform. Dadurch entsteht ein Hohlraum.
- Erzeugen eines Vakuums durch Absaugen der Luft im Hohlraum der verschlossenen Werkzeugform.
- Befüllen des Hohlraums der Werkzeugform mit einem aushärtbaren Kunststoffs bzw. Kunststoffsystems, z.B. durch den aufgrund des Vakuums entstandenen Unterdruck und ggf. gleichzeitiges Aufbringen eines Einspritzdrucks, um den mit Schläuchen (31, 33, 35) bzw. Bänder (31', 33, 35) bestückten U-förmigen Hohlraum dadurch vollständig mit dem aushärtbaren Kunststoff bzw. Kunststoffsystem aufzufüllen und dabei die Schläuche (31, 33, 35) oder Bänder (31', 33, 35) darin einzubetten.
- Aushärten des Kunststoffs bzw. Kunststoffsystems, vorzugsweise bei erhöhter Temperatur.
- Abkühlen und Hufbeschlag der Werkzeugform entnehmen.

Schläuche lassen sich bei der Herstellung von Hufbeschlägen flachgedrückt - ähnlich den Bändern - einlegen.

In einer besonders bevorzugten Ausführung werden geflochtene Aramidschläuche verwendet. Insoweit auch ein oder mehr horizontal ausgelegte Schläuche eingelegt werden, werden dafür ebenfalls Aramidschläuche bevorzugt; alternativ können hierfür ein oder mehr Carbonschläuche verwendet werden. Zur Erzeugung der Matrix werden aushärtbare Kunststoffharzsysteme, wie z.B. aushärtbare Epoxidharzsysteme oder aushärtbare Polyurethanharzsysteme, verwendet. Zum Aushärten wird der Hufbeschlag vorzugsweise für ca. 1 Stunde bei einer Temperatur von ungefähr 120°C gehalten bzw. behandelt. Die verwendete Werkzeugform ist vorzugsweise selbstheizend.

Ein Halten einer erhöhten Temperatur (d.h. einer über Raumtemperatur erhöhten Temperatur) über eine gewisse Zeitspanne beim Aushärten und/oder danach kann helfen Spannungen im Material abzubauen, Dies kann zu einer verbesserten Produktequalität führen.

Die verwendete Werkzeugform ist insbesondere selbstheizend in dem Sinne, dass die Temperatur der Werkzeugform auf einen bestimmten Wert (z.B. wie vorgenannt auf 120°C) eingestellt und über eine bestimmte Zeitspanne (z.B. wie vorgenannt für 1 Stunde) gehalten werden kann.

Während vorstehend spezifische Ausführungsformen beschrieben wurden, ist es offensichtlich, dass unterschiedliche Kombinationen der aufgezeigten Ausführungsmöglichkeiten angewendet werden können, insoweit sich die Ausführungsmöglichkeiten nicht gegenseitig ausschliessen.

Während die Erfindung vorstehend unter Bezugnahme auf spezifische Ausführungsformen beschrieben wurde, ist es offensichtlich, dass Änderungen, Modifikationen, Variationen und Kombinationen ohne vom Erfindungsgedanken abzuweichen gemacht werden können.

### BEZUGSZEICHENLISTE

- 10: Hufbeschlag bzw. Beschlag
- 11: Hufbeschlag bzw. Beschlag mit laufflächenseitiger Profilierung
- 13: Lauffläche bzw. Bodenseite des Beschlags
- 15: Hufkontaktfläche bzw. Hufseite des Beschlags
- 17: Beschlagaussenseite
- 18: Beschlaginnenseite
- 19: Abgeschrägte Laufflächenkante
- 21: Äussere (bzw. vordere) Laufflächenrippe
- 23: Innere (bzw. hintere) Laufflächenrippe
- 25: Laufflächenfurche
- 31, 31': perpendikulär zur Hufkontaktfläche ausgerichtete Verstärkungsschichten
- 33, 33': perpendikulär zur Hufkontaktfläche ausgerichtete Verstärkungsschichten
- 35, 35': parallel zur Hufkontaktfläche ausgerichtete Verstärkungsschichten
- 41: Matrix
- 51: Abriebschutz
- 53: Grundplatte
- 55: Innere (bzw. hintere) Steg
- 57: Äussere (bzw. vordere) Steg
- 59: Durchbruch

## Patentansprüche

1. Hufbeschlag (11), insbesondere Hufbeschlag für Pferde, beinhaltend eine Lauffläche (13) und eine Hufkontaktfläche (15), wobei der Hufbeschlag aus einer Kunststoffmatrix aufgebaut ist, in welche eine Vielzahl von Verstärkungsschichten (31, 31', 33, 33', 35, 35') gebettet sind, wobei die Verstärkungsschichten jeweils eine Längserstreckung aufweisen und die Verstärkungsschichten derart angeordnet sind, dass deren jeweilige Längserstreckung im Wesentlichen der U-förmigen Krümmung des Hufbeschlags folgt,
**dadurch gekennzeichnet, dass** mehrere der Verstärkungsschichten (31, 31', 33, 33') derart angeordnet sind, dass sie sich quer zu ihrer Längserstreckung im Wesentlichen jeweils von der Lauffläche (13) ausgehend zur Hufkontaktfläche (15) hin erstrecken.

2. Hufbeschlag nach dem vorangehenden Anspruch, **dadurch gekennzeichnet, dass** hufkontaktflächenseitig zumindest eine weitere der Verstärkungsschichten (35, 35') derart angeordnet ist, dass sie im Wesentlichen parallel zur Hufkontaktfläche (15) ausgerichtet ist, und dass vorzugsweise die im Wesentlichen parallel zur Hufkontaktfläche (15) ausgerichtete Verstärkungsschicht bzw. die oberste der im Wesentlichen parallel zur Hufkontaktfläche (15) ausgerichteten Verstärkungsschichten (35, 35') in der Matrix im Wesentlichen bis unter die Hufkontaktfläche (15) vordringt bzw. die Hufkontaktfläche (15) bildet.

3. Hufbeschlag nach dem vorangehenden Anspruch 2, **dadurch gekennzeichnet, dass** innerhalb der Matrix die sich quer zu ihrer Längserstreckung im Wesentlichen jeweils von der Lauffläche (13) ausgehend zur Hufkontaktfläche (15) hin erstreckenden Verstärkungsschichten (31, 31', 33, 33') mittels der zumindest einen parallel zur Hufkontaktfläche (15) ausgerichteten Verstärkungsschicht (35, 35') von der Hufkontaktfläche (15) beabstandet sind.

4. Hufbeschlag nach einem der vorangehenden Ansprüche, **dadurch gekennzeichnet, dass** die Lauffläche im Wesentlichen zwei oder wenigstens zwei nebeneinander verlaufende, der U-förmigen Krümmung des Hufbeschlags folgende Laufflächenrippen (21, 23) aufweist, zwischen welchen eine Laufflächenfurche (25) verläuft, und dass die sich quer zu ihrer Längserstreckung im Wesentlichen jeweils von der Lauffläche (13) ausgehend zur Hufkontaktfläche (15) hin erstreckenden Verstärkungsschichten (31, 31', 33, 33') in wenigstens eine erste Gruppe und eine zweite Gruppe aufgeteilt sind, wobei zumindest eine Verstärkungsschicht (31, 31') der ersten Gruppe in der Matrix in die erste Laufflächenrippe (21) vordringt und zumindest eine Verstärkungsschicht (33, 33') der zweiten Gruppe in der Matrix in die zweite Laufflächenrippe (23) vordringt, wobei in der Laufflächenfurche (25) Durchbrüche für Hufbeschlagnägel vorgesehen sein können.

5. Hufbeschlag nach einem der vorangehenden Ansprüche, **dadurch gekennzeichnet, dass** die Verstärkungsschichten (31, 31', 33, 33', 35, 35') als Schlauchstrukturen (31, 33, 35) oder Bandstrukturen (31, 33', 35') vorliegen, wobei Schlauchstrukturen besonders bevorzugt sind.

6. Hufbeschlag nach einem der vorangehenden Ansprüche, **dadurch gekennzeichnet, dass** die Verstärkungsschichten (31, 31', 33, 33', 35, 35') textile Strukturen sind, insb. z.B. ausgeführt als Geflecht, Gewebe, Gelege, Gestrick und/oder Gewirk, welche im Wesentlichen aus Fasern oder vorzugsweise aus Fasersträngen, welche aus einer Vielzahl von Fasern bestehen, gebildet sind.

7. Hufbeschlag nach Anspruche 6, **dadurch gekennzeichnet, dass** die Fasern im Wesentlichen Langfasern bzw. Endlosfasern sind und/oder dass die Fasern ausgewählt sind aus der Gruppe bestehend aus Aramidfasern, Carbonfasern, Polymerfasern, Glasfasern oder Kombinationen davon, wobei Aramidfasern bevorzugt sind.

8. Hufbeschlag nach einem der vorangehenden Ansprüche, **dadurch gekennzeichnet, dass** die Kunststoffmatrix im Wesentlichen ausgewählt ist aus der Gruppe ausgehärteter Kunststoffharzsysteme, wie z.B. Epoxidharze und Polyurethanharze.

9. Hufbeschlag nach einem der vorangehenden Ansprüche, **dadurch gekennzeichnet, dass** ein Abriebschutzelement vorzugsweise hufbeschlagerstreckungsmittig in der Kunststoffmatrix eingebettet ist, wobei vorzugsweise das Abriebschutzelement sich laufflächenseitig zumindest teilweise aus der Kunststoffmatrix erhebt und/oder das Abriebschutzelement die Form zweier gekrümmter, nebeneinander angeordneter Stege, welche der U-förmigen Krümmung des Hufbeschlags folgen und welche innerhalb der Kunststoffmatrix vorzugsweise über eine Brücke verbunden sind, aufweist.

10. Hufbeschlag nach einem der vorangehenden Ansprüche, **dadurch gekennzeichnet, dass** dieser durch ein Vakuumpressverfahren erzeugt ist.

11. Herstellungsverfahren für einen Hufbeschlag, insbesondere für einen Hufbeschlag nach einem der vorangehenden Ansprüche 1-10, **dadurch gekennzeichnet, dass** zumindest
- eine Werkzeugform mit im Wesentlichen ebener Arbeitsfläche, in welcher eine in der Ebene der Arbeitsfläche hufbeschlagförmig ausgestaltete Kavität ausgeformt ist, bereitgestellt wird,
- die Kavität mit mehreren Verstärkungsschichten (31, 31', 33, 33'), wie z.B. Bändern oder Schläuchen, befüllt wird, indem diese in ihrer Längserstreckung der U-förmigen Krümmung der Kavität folgend und quer zu ihrer Längserstreckung im Wesentlichen perpendikulär zur Arbeitsfläche ausgerichtet eingesetzt werden,
- die Kavität optional mit einer oder mehreren weiteren Verstärkungsschichten (35, 35'), wie z.B. Bändern oder Schläuchen, befüllt wird, indem diese über den zuvor eingelegten Verstärkungsschichten (31, 31', 33, 33') in ihrer Längserstreckung ebenfalls der U-förmigen Krümmung der Kavität folgend im Wesentlichen parallel zur Arbeitsfläche ausgerichtet ausgelegt werden, und
- ein aushärtbares Kunststoffsystem in die mit den Verstärkungsschichten (31, 31', 33, 33', 35, 35') bestückte Kavität eingetragen wird.

12. Herstellungsverfahren nach Anspruch 11, **dadurch gekennzeichnet, dass** bevor ein aushärtbares Kunststoffsystem in die Kavität eingetragen wird, die Kavität mit einem Deckel geschlossen wird, wodurch ein Formhohlraum entsteht.

13. Herstellungsverfahren nach einem der Ansprüche 11 oder 12, **dadurch gekennzeichnet, dass** die Kavität bzw. der Formhohlraum evakuiert wird.

14. Herstellungsverfahren nach einem der Ansprüche 11-13, **dadurch gekennzeichnet, dass** das Eintragen des aushärtbaren Kunststoffsystems durch Unterdruck im Formhohlraum, durch Aufbringen eines Einspritzdrucks oder einer Kombination von Unterdruck im Formhohlraum und Aufbringen eines Einspritzdrucks erfolgt.

15. Herstellungsverfahren nach einem der Ansprüche 11-14, **dadurch gekennzeichnet,**
- **dass** in der Kavität stiftartige Erhebungen angeordnet sind, welche dazu dienen die Nagellöcher im herzustellenden Hufbeschlag zu formen, und/oder
- **dass** ein Abriebschutzelement in die Kavität der Werkzeugform eingelegt wird, wobei vorzugsweise in der Kavität eine Vertiefung zur Aufnahme des Abriebschutzelements ausgeformt ist, wobei das Abriebschutzelement in der Kavität bevorzugterweise fixierbar ist, z.B. an wenigstens einer oder zwei Erhebungen, wobei diese Erhebungen den Erhebungen entsprechen können, welche zur Formung von Nagellöchern im Hufbeschlag dienen.
